# EUROPEAN PATENT APPLICATION

(11) **EP 1 783 792 A1**
(43) Date of publication of application: **09.05.2007**
(21) Application number: 04747299.8
(22) Date of filing: 09.07.2004
(51) Int. Cl.: H01G 9/058, C01B 31/12

(54) **ACTIVE CARBON FOR ELECTRIC DOUBLE LAYER CAPACITOR, ACTIVE CARBON ELECTRODE FOR ELECTRIC DOUBLE LAYER CAPACITOR AND ELECTRIC DOUBLE LAYER CAPACITOR UTILIZING THE SAME**

(71) Applicant: OSAKA GAS CO., LTD., Osaka-shi, Osaka 541-0046 (JP)
(72) Inventor: Nakagawa, Yoshiteru, c/o Osaka Gas Co., Ltd., Osaka-shi, Osaka 5410046 (JP); Tajiri, Hiroyuki, c/o Osaka Gas Co., Ltd., Osaka-shi, Osaka 5410046 (JP); Mabuchi, Akihiro, c/o Osaka Gas Co., Ltd., Osaka-shi, Osaka 5410046 (JP)
(74) Representative: Hauck Patent- und Rechtsanwälte
(86) International application number: PCT/JP2004/009831
(87) International publication number: WO 2006/006218

(57) **Abstract**

An electric double layer capacitor excellent in cycle characteristic with which a high electrostatic capacity is obtained by impression of a low voltage is provided.

Carbonization treatment is carried out in which 1kg of meso carbon micro beads whose particle diameter is 25µm is heated in a nitrogen atmosphere at 800°C for 2 hours, and is cooled to room temperature. The carbide of meso carbon micro beads and sodium hydroxide powder are mixed in a ratio by weight of 1:2.5. Alkali activation treatment is carried out in which the mixture is heated in a helium atmosphere at 600°C for 1 hour, and the carbide is exposed to sodium vapor. After cooling to room temperature, 8g of this carbon powder, 1g of ketchen black 1g and 1g of polytetrafluoroethylene are kneaded and rolled into a sheet 0.5mm thick. The sheet-like carbon material is stamped out 16mm in diameter to be active carbon layers 3 which form polarizable electrodes 4 in combination with collecting layers 2. The polarizable electrodes 4 and a separator 1 are combined and impregnated with an organic electrolytic solution to produce an electric double layer capacitor A.

## Description

### TECHNICAL FIELD

This invention relates to activated carbon for electric double layer capacitor, for use in an electric double layer capacitor a pair of polarizable electrodes in the form of a collecting layer and an active carbon layer opposed to each other across an ion-permeable separator impregnated with an electrolytic solution, to an activated carbon electrode for electric double layer capacitor, and to an electric double layer capacitor using same, for use as power source for cellular phones, auxiliary power source for automobiles, or backup power source for personal computers and various memories.

### BACKGROUND ART

A known electric double layer capacitor of this type is disclosed in Patent Document 1.
According to this conventional example, an active carbon layer is formed of a molding of optically anisotropic porous carbon microspheres obtained by activation treatment of meso carbon micro beads.
However, the electrostatic capacity obtained was as small as 1.25F or less (coin type capacitor).

What is disclosed in Patent Document 2 has been proposed as means to increase such electrostatic capacity.
In Patent Document 2, an electric double layer capacitor is manufactured through a first heat treatment process for making a carbon material that forms polarizable electrodes, by carbonizing a raw material and causing a growth of microcrystal carbon similar to graphite, and a second heat treatment process for heat treatment at or above a temperature for generating vapor of alkali metal. After assembling the electric double layer capacitor, a voltage of 4V is first applied between the polarizable electrodes, to insert forcibly ions of a solute in an organic electrolytic solution between the layers of the microcrystal carbon of the carbon material, thereby to realize an electrostatic capacity. Consequently, by reducing a specific surface area to increase electrode density, and applying the voltage of 4V, an electrostatic capacity of 22-35F/cc is obtained.
Patent Document 1: Specification of Patent No. 2634658
Patent Document 2: Unexamined Patent Publication No. 2000-77273

### DISCLOSURE OF THE INVENTION

### PROBLEM TO BE SOLVED BY THE INVENTION

However, in Patent Document 2, since the high voltage of 4V is applied to insert ions between the layers of microcrystal carbon, the carbon layers undergo expansion and contraction in time of charging and discharging. This is considered to cause the drawbacks of lowering the cycle characteristic of charging and discharging, lowering durability, and shortening life.

This invention has been made having regard to the state of the art noted above. The object of the invention according to claim 1 is to provide activated carbon for an electric double layer capacitor excellent in cycle characteristic with which a large electrostatic capacity is obtained by application of a low voltage not exceeding 3.2V. The object of the invention according to claim 2 is to provide an optically anisotropic carbonaceous material which is activated carbon in the form of meso carbon micro beads, and which has a high bulk density and is spherical, thereby to fill electrodes in high density to increase electrostatic capacity. The object of the invention according to claim 3 is to provide that the activated carbon in the form of the optically anisotropic carbonaceous material has a high bulk density to fill electrodes in high density to increase electrostatic capacity and realize low cost. The object of the invention according to claim 4 is to provide that the activated carbon is in the form of spherical particles to fill electrodes in high density to increase electrostatic capacity. The object of the invention according to claim 5 is to provide an activated carbon electrode for an electric double layer capacitor excellent in cycle characteristic with which a large electrostatic capacity is obtained by application of a low voltage. The object of the invention according to claim 6 is to provide an electric double layer capacitor excellent in cycle characteristic with which a large electrostatic capacity is obtained by application of a low voltage.

### MEANS FOR SOLVING THE PROBLEM

To fulfill the above object, the invention according to claim 1 provides;
activated carbon for electric double layer capacitor, for use in an electric double layer capacitor with a pair of activated carbon electrodes formed of current collectors and activated carbon, and opposed to each other across an ion-permeable separator, and charged and discharged with a voltage not exceeding 3.2V,
wherein the activated carbon is prepared by carrying out alkali activation treatment after carbonizing an optically anisotropic carbonaceous material excluding graphite.
In the alkali activation treatment, the carbonized carbide is mixed with sodium hydroxide (NaOH) powder or potassium hydroxide (KOH) powder, and the mixture is heated in an inert gas atmosphere such as helium gas or argon gas at 600 to 900°C, to expose the carbide to sodium (Na) vapor or potassium (K) vapor. From the viewpoint of electrostatic capacity, it is preferable to use sodium hydroxide (NaOH) powder.

To fulfill the object noted hereinbefore, the invention according to claim 2 provides
that, in activated carbon for electric double layer capacitor as defined in claim 1,
the optically anisotropic carbonaceous material is in form of meso carbon micro beads.
During a process of heating petroleum and coal pitch for development of needle coke and carbon fiber from the pitch, spherulites having carbon six-membered ring net planes laminated in parallel develop in the pitch. These spherulites form different phases to a matrix pitch, and are isolated by antisolvent method or centrifugal separation method. The isolated spherulites are called meso carbon micro beads which are minute balls of 1 to 85µm, and have an optically anisotropic porous structure.

To fulfill the object noted hereinbefore, the invention according to claim 3 provides
that, in activated carbon for electric double layer capacitor as defined in claim 1,
the optically anisotropic carbonaceous material is one of raw coke, mesophase pitch, and bulk mesophase.
Mesophase pitch and bulk mesophase are obtained by heating of petroleum and coal pitch when developing needle coke or carbon fiber from the pitch.
Raw coke, mesophase pitch or bulk mesophase, whichever is used, is crushed into grains for use.

To fulfill the object noted hereinbefore, the invention according to claim 4 provides
that, in activated carbon for electric double layer capacitor as defined in claim 1 or 3,
the activated carbon is in form of spherical particles.
The spherical particles can be obtained by spheroidizing, such as by rolling the optically anisotropic carbonaceous material, such as raw coke, mesophase pitch or bulk mesophase, on a turntable.

To fulfill the object noted hereinbefore, the invention according to claim 5 provides an activated carbon electrode for electric double layer capacitor
that is formed by using the activated carbon for electric double layer capacitor defined in any one of claims 1, 2, 3 and 4.

To fulfill the object noted hereinbefore, the invention according to claim 6 provides an electric double layer capacitor
that is formed by using the activated carbon electrode for electric double layer capacitor defined in claim 5.

### EFFECTS OF THE INVENTION

With the construction of electric double layer capacitors using the activated carbon for electric double layer capacitor of the invention according to claim 1, it has been found as a result of various experiments that, by using, as material, the activated carbon obtained by carrying out alkali activation treatment after carbonizing, and then making highly dense, an optically anisotropic carbonaceous material excluding graphite, electrostatic capacity higher than in the prior art can be obtained, even with application of a low voltage, and an excellent cycle characteristic is achieved.
Thus, the electric double layer capacitor provided has high electrostatic capacity with application of a low voltage, and is excellent in cycle characteristic. Since a high voltage is not applied, charge and discharge can be performed without expansion and contraction of active carbon layers. As a result, durability is improved to attain an extended life.
The electric double layer capacitor can be reduced in size for obtaining the same electrostatic capacity.

With the construction of electric double layer capacitors using the activated carbon for electric double layer capacitor of the invention according to claim 2, the activated carbon obtained by alkali activation treatment after carbonizing spherical meso carbon micro beads is filled in high density to realize high electrode density.
Thus, the optically anisotropic carbonaceous material is activated carbon in the form of meso carbon micro beads which have high bulk density and are spherical, and can therefore be filled in high density. As a result, high electrode density is obtained to increase electrostatic capacity. The electric double layer capacitor can be reduced in size for obtaining the same electrostatic capacity.

With the construction of the activated carbon for electric double layer capacitor of the invention according to claim 3, raw coke, needle coke, or mesophase pitch or bulk mesophase which is a by-product in development of carbon fiber is used.
Thus, activated carbon consisting of the optically anisotropic carbonaceous material has high bulk density and can be filled in high density to increase electrostatic capacity. This can be achieved at low cost, compared with meso carbon micro beads.

With the construction of electric double layer capacitors using the activated carbon for electric double layer capacitor of the invention according to claim 4, the activated carbon in form of spherical particles is used to fill in high density to increase electrode density.
Thus, high electrode density is obtained to increase electrostatic capacity. The electric double layer capacitor can be reduced in size for obtaining the same electrostatic capacity.

With the construction of electric double layer capacitors using the activated carbon electrode for electric double layer capacitor of the invention according to claim 5, electrostatic capacity higher than in the prior art can be obtained, even with application of a low voltage, and an excellent cycle characteristic is achieved.
Thus, the electric double layer capacitor provided has high electrostatic capacity with application of a low voltage, and is excellent in cycle characteristic. It is unnecessary to apply a high voltage, and durability is improved to attain an extended life. The capacitor can be reduced in size for obtaining the same electrostatic capacity.

With the construction of the electric double layer capacitor of the invention according to claim 6, electrostatic capacity larger than in the prior art can be obtained, even with application of a low voltage, and an excellent cycle characteristic is achieved.
Thus, the electric double layer capacitor provided has a large electrostatic capacity with application of a low voltage, and is excellent in cycle characteristic. It is unnecessary to apply a high voltage, and durability is improved to attain an extended life. The capacitor can be reduced in size for obtaining the same electrostatic capacity.

### BEST MODE FOR CARRYING OUT THE INVENTION

Next, embodiments of this invention will be described in detail with reference to the drawing.

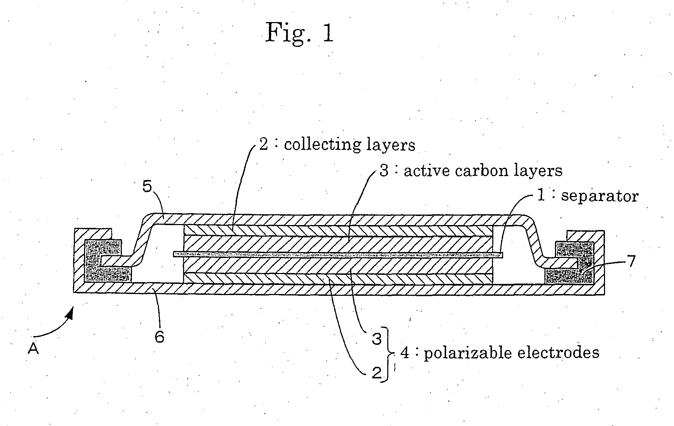

Fig. 1 is a sectional view showing a coin type electric double layer capacitor as an example of embodiment of electric double layer capacitors according to this invention. A pair of polarizable electrodes 4 as activated carbon electrodes for an electric double layer capacitor, which comprise collecting layers 2 as current collectors, and active carbon layers 3 as activated carbon for an electric double layer capacitor, are opposed to each other across an ion-permeable separator 1 impregnated with an electrolytic solution.

The polarizable electrodes 4, 4, respectively, have stainless steel cases 5, 6 spot-welding thereto, and a gasket ring is interposed between the cases 5, 6. Thus, an electric double layer capacitor A is constructed as mounted in a sealed casing with positive electrode and negative electrode insulated.

### Embodiment 1

Carbonization treatment was carried out in which 1kg of meso carbon micro beads whose particle diameter was 25µm was heated in a nitrogen atmosphere at 800°C for 2 hours, and was cooled to room temperature. Alkali activation treatment was carried out in which the carbide of meso carbon micro beads and sodium hydroxide (NaOH) powder were mixed in a ratio by weight of 1:2.5, and the mixture was heated in a helium atmosphere at 600°C for 1 hour, to expose the carbide to sodium vapor.

Rinsing treatment is carried out after cooling to room temperature, and neutralizing the carbon powder in a nitric acid solution. It was dried after removing alkalinity adhering thereto. When the specific surface area of the carbon powder was measured by N₂ BET method, it was 379m²/g. The product in this Embodiment 1 had a yield at 75%, and a pore volume of 0.235ml/g.

8g of the above carbon powder, 1g of ketchen black as a conductive material, and 1g of polytetrafluoroethylene (PTFE) as a binder were kneaded and rolled into a sheet 0.5mm thick.

The sheet-like activated carbon was stamped out 16mm in diameter to be active carbon layers which formed polarizable electrodes in combination with collecting layers. The polarizable electrodes and a separator were combined and impregnated with an organic electrolytic solution (tetraethylammonium and BF4/propylene carbonate), to produce an electric double layer capacitor. This assembly was carried out in a glove box that could maintain an argon atmosphere at a dew point of -80°C or below.

Subsequently, a voltage up to 2.7V was applied to the electric double layer capacitor obtained. Charging and discharging were carried out with 10mA charge current and 5mA discharge current. Electrostatic capacity per 1g of electrode and electrostatic capacity per volume of 1cc were 31.6F/g and 32.8F/cc, respectively.

### Embodiment 2

The capacitor was manufactured as in the first embodiment except that the temperature in time of alkali activation treatment was 700°C.
In Embodiment 2, the specific surface area was 467m²/g, yield was at 56%, and the pore volume was 0.294 ml/g. With the electric double layer capacitor obtained, electrostatic capacity per 1g of electrode and electrostatic capacity per volume of 1cc were 35.8F/g and 30.6F/cc, respectively.

### Embodiment 3

The capacitor was manufactured as in the first embodiment except that the temperature in time of alkali activation treatment was 800°C.
In Embodiment 3, the specific surface area was 184m²/g, yield was at 52%, and the pore volume was 0.129 ml/g. With the electric double layer capacitor obtained, electrostatic capacity per 1g of electrode and electrostatic capacity per volume of 1cc were 29.5F/g and 28.8F/cc, respectively.

### Embodiment 4

The capacitor was manufactured as in the first embodiment except that the temperature in time of alkali activation treatment was 900°C.
In Embodiment 4, the specific surface area was 154m²/g, yield was at 51%, and the pore volume was 0.180ml/g. With the electric double layer capacitor obtained, electrostatic capacity per 1g of electrode and electrostatic capacity per volume of 1cc were 24.4F/g and 20.7F/cc, respectively.

### Embodiment 5

(Embodiment 5)
The capacitor was manufactured as in the first embodiment except that the temperature in time of carbonization treatment was 900°C.
In Embodiment 5, the specific surface area was 79m²/g, yield was at 78%, and the pore volume was 0.057ml/g. With the electric double layer capacitor obtained, electrostatic capacity per 1g of electrode and electrostatic capacity per volume of 1cc were 27.9F/g and 31.1F/cc, respectively.

### Embodiment 6

The capacitor was manufactured as in the fifth embodiment except that the temperature in time of alkali activation treatment was 700°C.
In Embodiment 6, the specific surface area was 278m²/g, yield was at 60%, and the pore volume was 0.171ml/g. With the electric double layer capacitor obtained, electrostatic capacity per 1g of electrode and electrostatic capacity per volume of 1cc were 32.1F/g and 28.6F/cc, respectively.

### Embodiment 7

The capacitor was manufactured as in the fifth embodiment except that the temperature in time of alkali activation treatment was 800°C.
In Embodiment 7, the specific surface area was 181m²/g, yield was at 58%, and the pore volume was 0.146ml/g. With the electric double layer capacitor obtained, electrostatic capacity per 1g of electrode and electrostatic capacity per volume of 1cc were 28.8F/g and 27.3F/cc, respectively.

### Embodiment 8

The capacitor was manufactured as in the fifth embodiment except that the temperature in time of alkali activation treatment was 900°C.
In Embodiment 8, the specific surface area was 91m²/g, yield was at 58%, and the pore volume was 0.108ml/g. With the electric double layer capacitor obtained, electrostatic capacity per 1g of electrode and electrostatic capacity per volume of 1cc were 16.6F/g and 16.5F/cc, respectively.

The above results are shown in Table 1.

[Table 1]

**Table 1**

| embodiment | yield (%) | surface characteristics | | electrostatic capacity | |
|---|---|---|---|---|---|
| | | specific s. area (m²/g) | pore volume (ml/g) | F/g | F/cc |
| 1 | 75 | 379 | 0.235 | 31.6 | 32.8 |
| 2 | 56 | 467 | 0.294 | 35.8 | 30.6 |
| 3 | 52 | 184 | 0.129 | 29.5 | 28.8 |
| 4 | 51 | 154 | 0.180 | 24.4 | 20.7 |
| 5 | 78 | 79 | 0.057 | 27.9 | 31.1 |
| 6 | 60 | 278 | 0.171 | 32.1 | 28.6 |
| 7 | 58 | 181 | 0.146 | 28.8 | 27.3 |
| 8 | 58 | 91 | 0.108 | 16.6 | 16.5 |

### Embodiment 9

Carbonization treatment was carried out in which 1kg of meso carbon micro beads whose particle diameter was 3µm was heated in a nitrogen atmosphere at 800°C for 2 hours, and was cooled to room temperature. Alkali activation treatment was carried out in which the carbide of meso carbon micro beads and sodium hydroxide (NaOH) powder were mixed in a ratio by weight of 1:4, and the mixture was heated in an argon gas atmosphere at 700°C for 1 hour, to expose the carbide to sodium vapor.

Rinsing treatment is carried out after cooling to room temperature, and neutralizing the carbon powder in a hydrochloric acid solution. It was dries after removing alkalinity adhering thereto. When the specific surface area of the carbon powder was measured by N₂ BET method, it was 830m²/g. The product in this Embodiment 9 had a yield at 64%, and a pore volume of 0.501ml/g.

Electrodes were manufactured, using the above carbon powder, in the same manner as in Embodiment 1, to produce an electric double layer capacitor. A voltage up to 2.7V was applied to the electric double layer capacitor obtained. Charging and discharging were carried out with 10mA charge current and 5mA discharge current. Electrostatic capacity per 1g of electrode and electrostatic capacity per volume of 1cc were 31.5F/g and 27.1F/cc, respectively. A voltage up to 3.2V was applied, with the same charge and discharge currents. Electrostatic capacity per 1g of electrode and electrostatic capacity per volume of 1cc were 35.0F/g and 30.1F/cc, respectively.

### Embodiment 10

The capacitor was manufactured as in Embodiment 9 except that the meso carbon micro beads had a particle diameter of 10µm. In Embodiment 10, the specific surface area was 550m²/g, yield was at 65%, and the pore volume was 0.322 ml/g.

A voltage up to 2.7V was applied to the electric double layer capacitor obtained. Charging and discharging were carried out with 10mA charge current and 5mA discharge current. Electrostatic capacity per 1g of electrode and electrostatic capacity per volume of 1cc were 33.2F/g and 32.1F/cc, respectively. A voltage up to 3.2V was applied, with the same charge and discharge currents. Electrostatic capacity per 1g of electrode and electrostatic capacity per volume of 1cc were 38.8F/g and 37.6F/cc, respectively.

### Embodiment 11

The capacitor was manufactured as in Embodiment 9 except that the meso carbon micro beads had a particle diameter of 25µm. In Embodiment 11, the specific surface area was 530m²/g, yield was at 68%, and the pore volume was 0.348ml/g.

A voltage up to 2.7V was applied to the electric double layer capacitor obtained. Charging and discharging were carried out with 10mA charge current and 5mA discharge current. Electrostatic capacity per 1g of electrode and electrostatic capacity per volume of 1cc were 36.4F/g and 35.3F/cc, respectively. A voltage up to 3.2V was applied, with the same charge and discharge currents. Electrostatic capacity per 1g of electrode and electrostatic capacity per volume of 1cc were 40.5F/g and 39.3F/cc, respectively.

The above results show that, in each embodiment, the specific surface area is 830m2/g or less, i.e. highly dense.
Electrostatic capacity becomes the smaller, the higher the temperature is in time of carbonization treatment and in time of alkali activation treatment. Especially, when the temperature in time of alkali activation treatment exceeds 900°C, electrostatic capacity will decrease sharply. It is seen that the temperature in time of alkali activation treatment should be 800°C or below.

Based on the above, a desirable temperature in time of carbonization treatment is 800 to 900°C. This is because carbonization is insufficient with temperatures below 800°C, and graphitization will occur at temperatures above 900°C. A desirable temperature in time of alkali activation treatment is 600 to 800°C. This is because electrostatic capacity will decrease with temperatures below 600°C and above 800°C.

Activation treatment was carried out using potassium hydroxide (KOH) in place of sodium hydroxide (NaOH) powder. Electrostatic capacity was slightly less than when activation treatment was carried out with sodium hydroxide (NaOH) powder. However, excellent values were obtained, compared with the prior art, which suggested that alkali activation treatment would be sufficient.

The above meso carbon micro beads were subjected to carbonization treatment after carrying out alkali activation treatment, and electrostatic capacity was measured. It was found that electrostatic capacity could not be increased and that it was necessary to perform alkali activation treatment after carbonization treatment.

### BRIEF DESCRIPTION OF THE DRAWING

[Fig. 1] Sectional view showing a coin type electric double layer capacitor as an example of embodiment of electric double layer capacitors according to this invention

### [Description of Reference Signs]

1 -- separator
2 -- collecting layers
3 -- active carbon layers
4 -- polarizable electrodes
A -- electric double layer capacitor

## Claims

1. Activated carbon for electric double layer capacitor, for use in an electric double layer capacitor with a pair of activated carbon electrodes formed of current collectors and activated carbon, and opposed to each other across an ion-permeable separator, and charged and discharged with a voltage not exceeding 3.2V,
**characterized in that** the activated carbon for electric double layer capacitor is prepared by carrying out alkali activation treatment after carbonizing an optically anisotropic carbonaceous material excluding graphite.

2. Activated carbon for electric double layer capacitor as defined in claim 1, wherein the optically anisotropic carbonaceous material is in form of meso carbon micro beads.

3. Activated carbon for electric double layer capacitor as defined in claim 1, wherein the optically anisotropic carbonaceous material is one of raw coke, mesophase pitch, and bulk mesophase.

4. Activated carbon for electric double layer capacitor as defined in claim 1 or 3, wherein the activated carbon for electric double layer capacitor is in form of spherical particles.

5. An activated carbon electrode for electric double layer capacitor **characterized by** using the activated carbon for electric double layer capacitor defined in any one of claims 1, 2, 3 and 4.

6. An electric double layer capacitor **characterized by** using the activated carbon electrode for electric double layer capacitor defined in claim 5.
